# EUROPÄISCHE PATENTSCHRIFT

(11) **EP 3 949 721 B1**
(45) Veröffentlichungstag und Bekanntmachung des Hinweises auf die Patenterteilung: **04.09.2024**
(21) Anmeldenummer: 21186078.8
(22) Anmeldetag: 16.07.2021
(51) Int. Cl.: A01G 3/04, A01B 39/16

(54) **TRIMMVORRICHTUNG**
TRIMMING DEVICE
DISPOSITIF DE COUPE

(30) Priorität: 31.07.2020 DE 102020120329
(43) Veröffentlichungstag der Anmeldung: 09.02.2022
(73) Patentinhaber: Ilmer Maschinenbau GmbH, 39020 Castelbello Ciardes (IT)
(72) Erfinder: Ilmer, Oliver, 39020 Castelbello Ciardes (IT)
(74) Vertreter: Daub, Thomas

(56) Entgegenhaltungen:
- DE-A1- 102009 036 557
- DE-A1- 2 704 558
- FR-A1- 2 476 978
- FR-A1- 2 938 400
- GB-A- 2 332 132
- US-A- 4 887 418
- US-A- 5 259 692

## Beschreibung

### Stand der Technik

Die Erfindung betrifft eine Trimmvorrichtung, insbesondere von einem Stockputzer, insbesondere zur Bearbeitung von Rebstöcken im Weinbau, mit einer um eine Drehachse rotierbaren Trimmeinheit, welche zu einer mechanischen Entfernung von Stockaustrieben an Rebstöcken vorgesehen ist und eine Trimmwelle und eine Vielzahl von entlang einer Umfangsrichtung an der Trimmwelle angeordneten Trimmelementen aufweist, und mit einer Antriebseinheit zu einem Antrieb der Trimmeinheit.

Aus dem Stand der Technik sind bereits Trimmvorrichtungen zur mechanischen Entfernung von Stockaustrieben an Rebstöcken bekannt, welche oftmals auch als Stockputzer bezeichnet werden. Bekannte derartige Trimmvorrichtungen umfassen eine rotierbare Trimmwelle mit daran angeordneten Trimmelementen und eine Antriebseinheit zu einem Antrieb der Trimmwelle, wobei die Antriebseinheit von außen an der Trimmwelle angeflanscht ist. Wenn die Antriebseinheit von außen an der Trimmwelle angeflanscht ist, ergibt sich nachteilig ein hoher Platzbedarf, wodurch ein Nutzer bei seiner Arbeit mit der Trimmvorrichtung, insbesondere in Anbetracht von typischerweise sehr geringen Abständen zwischen Reihen von zu bearbeitenden Rebstöcken, stark eingeschränkt ist.

Beispielsweise offenbart die DE 27 04 558 A1 einen Rebstockputzer zum Entfernen der Jungblatt-Triebe im Bodenbereich bzw. in Bodenbereichsnähe von Rebstöcken mit einem in Arbeitslage mit Federkraft über eine Aufhängung in horizontaler Richtung an einen Rebstock andrück- und an diesem mit einer fahrbaren Anordnung daran vorbeibewegbaren Laubabstreifer, welcher als eine an einem freien Ende der Aufhängung angebrachte Rundbürste ausgebildet ist, die mit ihrem oberen freien Ende in einer Lagerbüchse eines axial zur Rundbürste, ebenfalls am freien Ende vorgesehenen, Motors befestigt und durch diesen drehbar ist.

Des Weiteren ist aus der DE 10 2009 036557 A1 ein Mäh- und/oder Schneidgerät bekannt, mit einem um eine Drehachse rotierbaren Arbeitskopf, welcher eine Welle und daran angeordnete Schneid- oder Schlagmittel umfasst, und mit einem Hydraulikantrieb, umfassend einen Motor, welcher innerhalb der Welle angeordnet ist, wobei die Welle und der Motor voneinander unabhängig an ein Gehäuse gelagert sind. Das in der DE 10 2009 036557 A1 offenbarte Mäh- und/oder Schneidgerät ist für Grasmäharbeiten neben der Straße mit rotierenden Schneid- oder Schlagmitteln, Hecken- und Buschwerksschneidarbeiten, Reinigungsarbeiten mit rotierenden Bürsten oder Fräsen und ähnlichen Arbeiten vorgesehen.

Vorrichtungen mit innerhalb einer drehbaren Welle angeordneten Antriebseinheiten sind zudem in der GB 2 332 132 A zur Verwendung in einem Rasenmäher, in der US 4 887 418 A zur Verwendung als Mäher oder Häcksler und in der US 5 259 692 A zur Verwendung in einem Erdarbeitsgerät offenbart.

Die Aufgabe der Erfindung besteht insbesondere darin, eine gattungsgemäße Vorrichtung mit verbesserten Eigenschaften hinsichtlich einer kompakten Bauweise bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Trimmvorrichtung, insbesondere Stockputzer, insbesondere zur Bearbeitung von Rebstöcken im Weinbau, mit einer um eine Drehachse rotierbaren Trimmeinheit, welche zu einer mechanischen Entfernung von Stockaustrieben an Rebstöcken vorgesehen ist und eine Trimmwelle und eine Vielzahl von entlang einer Umfangsrichtung an der Trimmwelle angeordneten Trimmelementen aufweist, und mit einer Antriebseinheit zu einem Antrieb der Trimmeinheit.

Es wird vorgeschlagen, dass die Antriebseinheit in einem montierten Zustand innerhalb der Trimmwelle angeordnet ist.

Durch eine derartige Ausgestaltung kann vorteilhaft eine besonders kompakte Bauweise der Trimmvorrichtung erreicht werden. Hierdurch ergeben sich weiter vorteilhaft eine erhöhte Flexibilität und ein verbesserter Bedienkomfort für Nutzer der Trimmvorrichtung. Es kann insbesondere auch in Fällen von sehr geringen Abständen zwischen Reihen von mittels der Trimmvorrichtung zu bearbeitenden Rebstöcken ein hohes Maß an Beweglichkeit und Flexibilität erreicht werden. Bedingt durch die kompakte Bauweise der Trimmvorrichtung kann vorteilhaft eine Arbeitserleichterung für Nutzer der Trimmvorrichtung erzielt werden. Zudem kann vorteilhaft ein wirksamer Schutz der Antriebseinheit vor äußeren Einflüssen, beispielsweise vor Witterungseinflüssen oder dergleichen, ohne weitere Elemente, wie etwa einem Schutzgehäuse oder dergleichen, erreicht werden, wenn die Antriebseinheit in der Trimmwelle angeordnet ist. Hierdurch kann weiter vorteilhaft eine Anzahl von Bauteilen reduziert und eine Kostenersparnis erreicht werden.

Die Trimmvorrichtung weist die Trimmeinheit und die Antriebseinheit auf und weist darüber hinaus eine Lagereinheit und eine Gehäuseeinheit auf. Vorzugsweise ist die Trimmvorrichtung zu einem Anschluss an ein landwirtschaftliches Gerät, beispielsweise an ein Mulchgerät und/oder an einen Traktor und/oder dergleichen, vorgesehen oder ist Teil eines solchen landwirtschaftlichen Geräts. Alternativ wäre jedoch auch denkbar, dass die Trimmvorrichtung zu einem eigenständigen Betrieb ohne ein landwirtschaftliches Gerät vorgesehen ist und hierfür entsprechende Einheiten, wie beispielsweise ein Fahrgestell mit Rädern, entsprechende Handgriffe und dergleichen, aufweist.

Die Trimmeinheit weist zumindest die Trimmwelle und die entlang der Umfangsrichtung an der Trimmwelle angeordneten Trimmelemente auf. Die Trimmeinheit kann darüber hinaus weitere Einheiten und/oder Elemente aufweisen, beispielsweise eine weitere Trimmwelle und weitere Trimmelemente, welche zu den Trimmelementen verschiedenartig ausgebildet sind. Entlang der Umfangsrichtung der Trimmwelle sind eine Vielzahl von zumindest vier, insbesondere von zumindest acht, vorteilhaft von zumindest zehn, vorzugsweise von zumindest zwölf und besonders bevorzugt von zumindest vierzehn Trimmelementen angeordnet. Die Trimmelemente könnten stoffschlüssig mit der Trimmwelle verbunden, beispielsweise verschweißt oder verklebt, sein. Vorzugsweise sind die Trimmelemente lösbar mit der Trimmwelle verbunden und zwar mittels einer form- und/oder kraftschlüssigen Verbindung, beispielsweise mittels einer Steckverbindung und/oder einer Rastverbindung und besonders bevorzugt mittels einer Schraubverbindung. Hierdurch kann vorteilhaft eine Montage und/oder Demontage, beispielsweise eine Entnahme von einzelnen oder sämtlichen Trimmelementen zu Reparaturzwecken und/oder ein Austausch zu einem Wechsel auf einen anderen Typ von Trimmelementen, erleichtert werden. Die Trimmelemente könnten beispielsweise als Bürsten ausgebildet sein. Vorzugsweise sind die Trimmelemente als sogenannte Schläger ausgebildet und weisen eine Geometrie in Form von länglichen Streifen auf. Die Trimmelemente sind vorzugsweise wiederholt verformbar, ohne durch eine Verformung mechanisch beschädigt und/oder zerstört zu werden und streben nach einer Verformung insbesondere wieder einer Grundform zu. Die Trimmelemente weisen vorzugsweise ein elastisch verformbares Material, beispielsweise einen Kunststoff aus der Gruppe der Elastomere und/oder einen Synthesekautschuk und/oder einen Naturkautschuk, auf und sind besonders bevorzugt zu wenigstens einem Großteil von zumindest 90 % aus einem elastisch verformbaren Material ausgebildet.

Die Antriebseinheit weist zumindest einen Motor auf, welcher dazu vorgesehen ist, zumindest eine Form von Energie, beispielsweise eine chemische und/oder elektrische und/oder hydraulische und/oder pneumatische Energie, zumindest teilweise in eine Form von mechanischer Arbeit, insbesondere in ein Antriebsmoment, vorzugsweise in ein Drehmoment, zu einem Antrieb der Trimmeinheit zu wandeln. Die Antriebseinheit weist zumindest einen Versorgungsanschluss auf, mittels dessen die Antriebseinheit mit zumindest einer Energiequelle verbunden und mit zumindest einer Form von Energie versorgt werden kann. Die Energiequelle könnte Teil der Trimmvorrichtung oder Teil des landwirtschaftlichen Geräts sein, an welches die Trimmvorrichtung angeschlossen werden kann und/oder von dessen sie Teil ist, oder es könnte sich dabei um eine, insbesondere stationäre, externe Energiequelle, beispielsweise um einen Anschluss an ein Stromversorgungsnetz oder dergleichen, handeln. Beispielsweise wäre denkbar, dass die Energiequelle als ein Energiespeicher ausgebildet ist, welcher Energie, insbesondere chemische und/oder elektrische Energie, aufnehmen, speichern und abgeben kann, beispielsweise als ein Lithium-Ionen-Akkumulator oder dergleichen, und welcher Teil der Trimmvorrichtung oder Teil des landwirtschaftlichen Geräts sein kann.

Vorzugsweise ist die Antriebseinheit in dem montierten Zustand derart innerhalb der Trimmwelle angeordnet, dass sie zumindest entlang der Umfangsrichtung vollständig von der Trimmwelle abgedeckt ist. Vorzugsweise ist die Antriebseinheit zusätzlich zu der Umfangsrichtung in zumindest einer weiteren Richtung parallel zu der Drehachse abgedeckt und zwar insbesondere durch ein Abdeckelement der Trimmeinheit.

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Zudem wird vorgeschlagen, dass die Trimmeinheit ein Abschlusselement aufweist, welches in dem montierten Zustand ein Ende der Trimmwelle verschließt und an welchem die Antriebseinheit angreift. Durch eine derartige Ausgestaltung kann vorteilhaft ein Schutz der Antriebseinheit vor äußeren Einflüssen mit einfachen technischen Mitteln erreicht werden. Darüber hinaus kann vorteilhaft eine über die gesamte Umfangsrichtung besonders gleichmäßige Übertragung eines Antriebsmoments von der Antriebseinheit auf die Trimmeinheit ermöglicht werden, wenn die Antriebseinheit an dem Abschlusselement angreift. Vorzugsweise ist die Antriebseinheit, insbesondere eine Antriebswelle der Antriebseinheit, in dem montierten Zustand form- und/oder kraftschlüssig, beispielsweise mittels einer Schraubverbindung, mit dem Abschlusselement verbunden. Vorzugsweise ist das Abschlusselement lösbar, insbesondere form- und/oder kraftschlüssig, beispielsweise mittels zumindest einer Schraubverbindung, mit der Trimmwelle verbunden. Alternativ könnte das Abschlusselement stoffschlüssig mit der Trimmwelle verbunden, beispielsweise verschweißt, sein oder einstückig mit der Trimmwelle ausgebildet sein.

Ferner weist die Trimmvorrichtung eine Lagereinheit auf, welche die Antriebseinheit und die Trimmeinheit bezüglich einer Gehäuseeinheit lagert. Hierdurch können vorteilhaft die Antriebseinheit und die Trimmeinheit mit einfachen technischen Mitteln bezüglich der Gehäuseeinheit gelagert werden. Die Lagereinheit weist vorzugsweise zumindest ein Lagerelement auf, welches in dem montierten Zustand zu der Lagerung der Trimmeinheit und der Antriebseinheit feststehend mit der Gehäuseeinheit verbunden ist. Das Lagerelement könnte in dem montierten Zustand stoffschlüssig mit der Gehäuseeinheit verbunden, beispielsweise verschweißt, sein. Vorzugsweise ist das Lagerelement in dem montierten Zustand lösbar und mittels einer form- und/oder kraftschlüssigen Verbindung mit der Gehäuseeinheit verbunden, beispielsweise an der Gehäuseeinheit angeflanscht. Die Gehäuseeinheit kann Teil des landwirtschaftlichen Geräts, an das die Trimmvorrichtung anschließbar und/oder dessen Teil sie ist, sein. Vorzugsweise ist die Gehäuseeinheit Teil der Trimmvorrichtung. Vorzugsweise weist die Gehäuseeinheit zumindest ein Einhausungselement auf, welches die Trimmeinheit bezüglich zumindest einer Raumrichtung, vorzugsweise über zumindest ein Viertel eines Umfangs der Trimmwelle, einhaust und welches zu einem Schutz vor Wurfgeschossen, beispielsweise in Form von durch die Trimmelemente abgeschlagenen und herausgeschleuderten Teilen von Rebstöcken oder dergleichen, vorgesehen ist. Hierdurch kann vorteilhaft eine Arbeitssicherheit für Nutzer der Trimmvorrichtung erhöht werden.

Erfindungsgemäß weist die Lagereinheit einen feststehenden Innenzylinder auf, an dem die Trimmwelle an einer Außenseite und die Antriebseinheit an einer Innenseite drehbar gelagert sind. Durch eine derartige Ausgestaltung kann vorteilhaft eine Anordnung der Antriebswelle innerhalb der Trimmeinheit weiter verbessert werden. Es kann vorteilhaft eine besonders kompakte Bauweise bei zugleich vorteilhaften Eigenschaften hinsichtlich einer Laufruhe der Trimmwelle erreicht werden. In dem montierten Zustand ist der Innenzylinder mittelbar oder unmittelbar und feststehend mit der Gehäuseeinheit verbunden. Der Innenzylinder könnte stoffschlüssig mit der Gehäuseeinheit verbunden, beispielsweise verschweißt, sein. Vorzugsweise ist der Innenzylinder mittels einer form- und/oder kraftschlüssigen Verbindung, beispielsweise mittels einer Schraubverbindung, vorzugsweise mittels einer Flanschverbindung, lösbar und feststehend mit der Gehäuseeinheit verbunden. Darunter dass der Innenzylinder "feststehend" ist, soll verstanden werden, dass der Innenzylinder derart mir der Gehäuseeinheit verbunden ist, dass in dem montierten Zustand eine Relativbewegung des Innenzylinders zu der Gehäuseeinheit verhindert ist.

Darüber hinaus wird vorgeschlagen, dass die Lagereinheit zumindest ein Trimmlager aufweist, mittels dessen die Trimmwelle in dem montierten Zustand drehbar an der Außenseite des Innenzylinders gelagert ist. Hierdurch kann eine zuverlässige Lagerung der Trimmwelle an dem Innenzylinder vorteilhaft mit einfachen technischen Mitteln ermöglicht und zudem vorteilhaft eine besonders gleichmäßige Rotation der Trimmeinheit um die Drehachse erreicht werden. Das Trimmlager könnte als ein Gleitlager ausgebildet sein. Vorzugsweise ist das Trimmlager als ein Wälzlager und besonders bevorzugt als ein Kugellager ausgebildet. Die Lagereinheit könnte eine Mehrzahl von zumindest zwei Trimmlagern aufweisen, mittels derer die Trimmwelle in dem montierten Zustand drehbar an der Außenseite des Innenzylinders gelagert ist. Vorzugsweise weist die Lagereinheit jedoch genau ein Trimmlager auf, mittels dessen die Trimmwelle in dem montierten Zustand drehbar an der Außenseite des Innenzylinders gelagert ist. Hierdurch kann vorteilhaft eine besonders kompakte Bauweise erreicht werden. Zudem kann vorteilhaft eine Anzahl von Bauteilen reduziert und somit eine Kostenersparnis erreicht werden.

Ferner wird vorgeschlagen, dass die Lagereinheit ein Antriebslager aufweist, mittels dessen die Antriebseinheit in dem montierten Zustand drehbar an der Innenseite des Innenzylinders gelagert ist. Durch eine derartige Ausgestaltung kann eine zuverlässige Lagerung der Trimmwelle an dem Innenzylinder vorteilhaft mit einfachen technischen Mitteln ermöglicht und zudem vorteilhaft eine besonders gleichmäßige Rotation des Motors der Antriebseinheit innerhalb des Innenzylinders erreicht werden. Das Antriebslager könnte als ein Gleitlager ausgebildet sein. Vorzugsweise ist das Antriebslager als ein Wälzlager und besonders bevorzugt als ein Kugellager ausgebildet. Die Lagereinheit könnte eine Mehrzahl von zumindest zwei Antriebslagern aufweisen, mittels derer die Antriebseinheit in dem montierten Zustand drehbar an der Innenseite des Innenzylinders gelagert ist. Vorzugsweise weist die Lagereinheit jedoch genau ein Antriebslager auf, mittels dessen die Antriebseinheit in dem montierten Zustand drehbar an der Innenseite des Innenzylinders gelagert ist. Hierdurch kann vorteilhaft eine besonders kompakte Bauweise erreicht werden. Zudem kann vorteilhaft eine Anzahl von Bauteilen weiter reduziert und somit eine Kostenersparnis ermöglicht werden.

Des Weiteren wird vorgeschlagen, dass das Antriebslager in dem montierten Zustand in einem Nahbereich des Abschlusselements angeordnet ist. Durch eine derartige Ausgestaltung kann vorteilhaft eine besonders gleichmäßige Übertragung des Antriebsmoments von der Antriebseinheit über das Abschlusselement auf die Trimmwelle erreicht werden. Vorzugsweise erstreckt sich der Nahbereich des Abschlusselements in dem montierten Zustand von dem Ende der Trimmwelle, welches durch das Abschlusselement verschlossen ist, aus in Richtung eines weiteren Endes der Trimmwelle und parallel zu der Drehachse um eine Erstreckung, welche maximal 10 %, vorzugsweise maximal 9 % und besonders bevorzugt maximal 8 % einer längsten Seitenerstreckung der Trimmwelle entspricht.

Darüber hinaus wird vorgeschlagen, dass das Trimmlager in dem montierten Zustand weiter von dem Abschlusselement entfernt angeordnet ist als das Antriebslager. Hierdurch kann vorteilhaft eine besonders gleichmäßige Rotation der Trimmeinheit um die Drehachse erreicht werden. Zudem kann vorteilhaft die Lagerung der Trimmwelle und der Antriebswelle bezüglich der Gehäuseeinheit mit genau zwei Lagern, nämlich dem Trimmlager und dem Antriebslager, ermöglicht werden. Vorzugsweise ist das Trimmlager in dem montierten Zustand in einem Abstand von dem Abschlusselement entfernt angeordnet, welcher zumindest 65%, vorteilhaft zumindest 70 %, besonders vorteilhaft zumindest 75 %, vorzugsweise zumindest 80 % und besonders bevorzugt zumindest 85 % einer längsten Seitenerstreckung der Trimmwelle entspricht.

Zudem wird vorgeschlagen, dass die Antriebseinheit einen Hydraulikmotor umfasst. Durch eine derartige Ausgestaltung kann vorteilhaft eine besonders robuste und zuverlässige Antriebseinheit bereitgestellt werden. Der Hydraulikmotor ist vorzugsweise dazu vorgesehen, hydraulische Energie, welche in Form eines Produkts aus einem Druck und einem Volumen einer Hydraulikflüssigkeit, welche der Antriebseinheit in einem Betriebszustand über den zumindest einen Versorgungsanschluss zugeführt wird, vorliegt, zumindest teilweise, insbesondere unter Berücksichtigung eines hydraulisch-mechanischen Wirkungsgrads, in eine mechanische Arbeit zu einem Antrieb der Trimmeinheit zu wandeln. Der Hydraulikmotor kann entweder als ein hydrostatischer Antrieb oder als ein hydrodynamischer Antrieb ausgebildet sein. Der Hydraulikmotor kann ein konstantes Schluckvolumen aufweisen. Unter einem "Schluckvolumen" soll vorzugsweise die Menge an Hydraulikflüssigkeit verstanden werden, welche für eine vollständige Umdrehung des Hydraulikmotors benötigt wird. Vorzugsweise weist der Hydraulikmotor ein variables Schluckvolumen auf. Hierdurch ist vorteilhaft eine Drehzahl des Hydraulikmotors und damit auch eine Drehzahl der Trimmwelle variabel einstellbar. Alternativ oder zusätzlich wäre denkbar, dass die Antriebseinheit einen Elektromotor zu dem Antrieb der Trimmeinheit umfasst.

Ferner wird vorgeschlagen, dass die Trimmelemente in einem spitzen Ausgangswinkel zu der Drehachse mit der Trimmwelle verbunden sind. Durch eine derartige Ausgestaltung kann vorteilhaft eine Belastung der Trimmelemente an einer Verbindungsstelle mit der Trimmwelle reduziert werden, da die Trimmelemente an der Verbindungsstelle weniger stark eingeknickt und dadurch weniger stark mechanisch beansprucht werden, wenn die Trimmelemente in einem spitzen Ausgangswinkel zu der Drehachse mit der Trimmwelle verbunden sind. Hierdurch kann weiter vorteilhaft eine besonders zuverlässige und langlebige Trimmvorrichtung mit einem reduzierten Wartungs- und/oder Reparaturaufwand bereitgestellt werden. Vorzugsweise sind die Trimmelemente in einem spitzen Ausgangswinkel mit einem Wert zwischen 15° und 45°, vorteilhaft zwischen 20° und 40°, besonders vorteilhaft zwischen 25° und 35°, vorzugsweise zwischen 28° und 32° und besonders bevorzugt in einem spitzen Ausgangswinkel von 30°, mit der Trimmwelle verbunden.

Des Weiteren wird vorgeschlagen, dass der spitze Ausgangswinkel bezüglich einer Drehrichtung der Trimmwelle nacheilend ist. Hierdurch kann vorteilhaft eine Belastung der Trimmelemente an einer Verbindungsstelle mit der Trimmwelle weiter reduziert, vorzugsweise minimiert, werden. Unter "nacheilend" soll in diesem Zusammenhang verstanden werden, dass die Trimmelemente derart mit der Trimmwelle verbunden sind, dass der spitze Ausgangswinkel von einer zu der Drehrichtung abgewandten Seite des Trimmelements und der Trimmwelle eingeschlossen wird.

Die Trimmelemente könnten an der Trimmwelle beispielsweise linear, also beispielsweise in einer oder mehreren zu der Drehachse parallel oder radial verlaufenden Reihen, angeordnet sein. In einer vorteilhaften Ausgestaltung wird jedoch vorgeschlagen, dass die Trimmelemente entlang der Umfangsrichtung der Trimmwelle spiralförmig angeordnet sind. Durch eine derartige Ausgestaltung kann vorteilhaft eine besonders gleichmäßige mechanische Belastung der Trimmwelle erreicht werden, insbesondere da zeitgleich höchstens ein Trimmelement auf einen Rebstock und höchstens ein Trimmelement auf den Boden aufschlagen kann. Hierdurch kann eine besonders gleichmäßige Rotation der Trimmwelle und somit eine besonders hohe Laufruhe erzielt werden. Vorzugsweise sind die Trimmelemente entlang der Umfangsrichtung derart spiralförmig an der Trimmwelle angeordnet, dass jedes der Trimmelemente zu zumindest einem nächstliegenden der Trimmelemente bezüglich der Umfangsrichtung und bezüglich einer Seitenerstreckung der Trimmwelle parallel zur Drehachse versetzt angeordnet ist. Vorzugsweise sind die Trimmelemente in Umfangsrichtung zueinander jeweils in einem Winkel versetzt angeordnet, welcher dem spitzen Anstellwinkel entspricht.

Vorzugsweise sind die Trimmelemente bezüglich der Seitenerstreckung der Trimmwelle parallel zur Drehachse in regelmäßigen Abständen zueinander versetzt angeordnet.

Zudem wird vorgeschlagen, dass eine erste Gruppe von Trimmelementen entlang der Umfangsrichtung in einem ersten Spiralverlauf angeordnet ist und eine zweite Gruppe von Trimmelementen entlang der Umfangsrichtung in einem zu dem ersten Spiralverlauf gegenläufigen zweiten Spiralverlauf angeordnet ist. Durch eine derartige Ausgestaltung kann vorteilhaft ein besonders gleichmäßiges Trimmergebnis bei gleichzeitig hoher Laufruhe der Trimmwelle erreicht werden. Vorzugsweise erstreckt sich der erste Spiralverlauf zumindest entlang eines ersten halben Umfangs der Trimmwelle und der zweite Spiralverlauf zumindest entlang eines dem ersten halben Umfang der Trimmwelle gegenüberliegenden zweiten halben Umfangs der Trimmwelle.

Darüber hinaus wird vorgeschlagen, dass jeweils ein Trimmelement der ersten Gruppe und jeweils ein Trimmelement der zweiten Gruppe bezüglich der Drehachse auf zueinander gegenüberliegenden Seiten der Trimmwelle angeordnet sind. Hierdurch kann vorteilhaft eine symmetrische Anordnung der Trimmelemente an der Trimmwelle erreicht werden, wodurch eine Laufruhe der Trimmwelle weiter verbessert werden kann.

Die Erfindung betrifft ferner ein Mulchgerät mit zumindest einer Trimmvorrichtung nach einer der vorhergehend beschriebenen Ausgestaltungen. Ein derartiges Mulchgerät zeichnet sich insbesondere durch die vorhergenannten vorteilhaften Eigenschaften der Trimmwelle aus. Durch die besonders kompakte Bauweise der Trimmvorrichtung kann vorteilhaft eine Arbeitserleichterung für Nutzer des Mulchgeräts erreicht werden. Vorzugsweise ist die Trimmvorrichtung einer Mulch- und/oder Mäheinheit des Mulchgeräts vorgelagert, so dass in einem Betrieb ein Bodenbewuchs durch die Trimmelemente zumindest teilweise abgeschlagen beziehungsweise nach außen gekämmt wird und somit ein anschließendes Abmähen durch die Mulch- und/oder Mäheinheit erleichtert ist. Vorzugsweise weist das Mulchgerät zumindest zwei Trimmvorrichtungen auf, welche auf zueinander gegenüberliegenden Seiten senkrecht zu einer Fahrrichtung des Mulchgeräts anordenbar sind. Hierdurch kann vorteilhaft eine gleichzeitige Bearbeitung von zwei Reihen von Rebstöcken ermöglicht werden.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:
- Fig. 1: ein Mulchgerät mit zumindest einer Trimmvorrichtung in einer schematischen perspektivischen Ansicht,
- Fig. 2: die Trimmvorrichtung mit einer um eine Drehachse rotierbaren Trimmeinheit, umfassend eine Trimmwelle und eine Vielzahl an der Trimmwelle angeordneten Trimmelementen, und mit einer Gehäuseeinheit in einer schematischen perspektivischen Ansicht,
- Fig. 3: eine schematische Teilschnittansicht der Trimmvorrichtung mit einem Schnitt durch die Trimmwelle und mit einer innerhalb der Trimmwelle angeordneten Antriebseinheit und einer Lagereinheit,
- Fig. 4: eine schematische Seitenansicht der Trimmeinheit in Blickrichtung entlang der Drehachse und
- Fig. 5: eine schematische perspektivische Ansicht der Trimmeinheit.

### Beschreibung der Ausführungsbeispiele

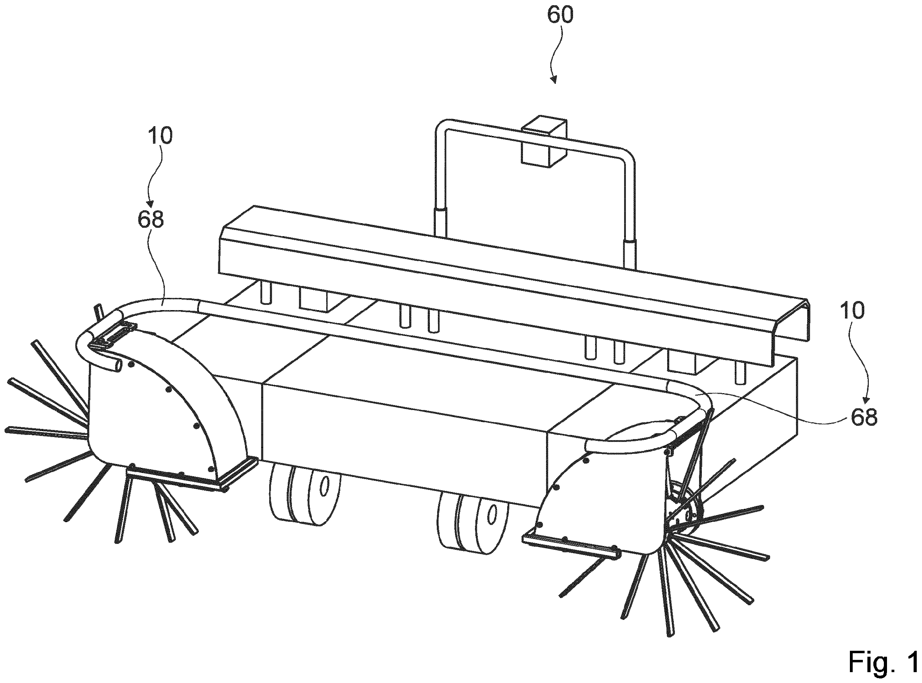

Fig. 1 zeigt ein Mulchgerät 60 mit zumindest einer Trimmvorrichtung 10. Das Mulchgerät 60 ist zu einem Einsatz im Weinbau vorgesehen. Die Trimmvorrichtung 10 ist als ein Stockputzer ausgebildet und zu einer Bearbeitung von Rebstöcken im Weinbau vorgesehen. In der Figur 1 sind zwei Trimmvorrichtungen 10 dargestellt, welche jeweils mittels eines Verbindungselements 68 auf einander gegenüberliegenden Seiten mit dem Mulchgerät 60 verbunden sind, sodass eine gleichzeitige Bearbeitung von zwei benachbarten Reihen von Rebstöcken (nicht dargestellt) möglich ist. Die zwei in der Figur 1 dargestellten Trimmvorrichtungen 10 sind zueinander im Wesentlichen identisch ausgebildet, weshalb im Folgenden lediglich eine Trimmvorrichtung 10 beschrieben wird.

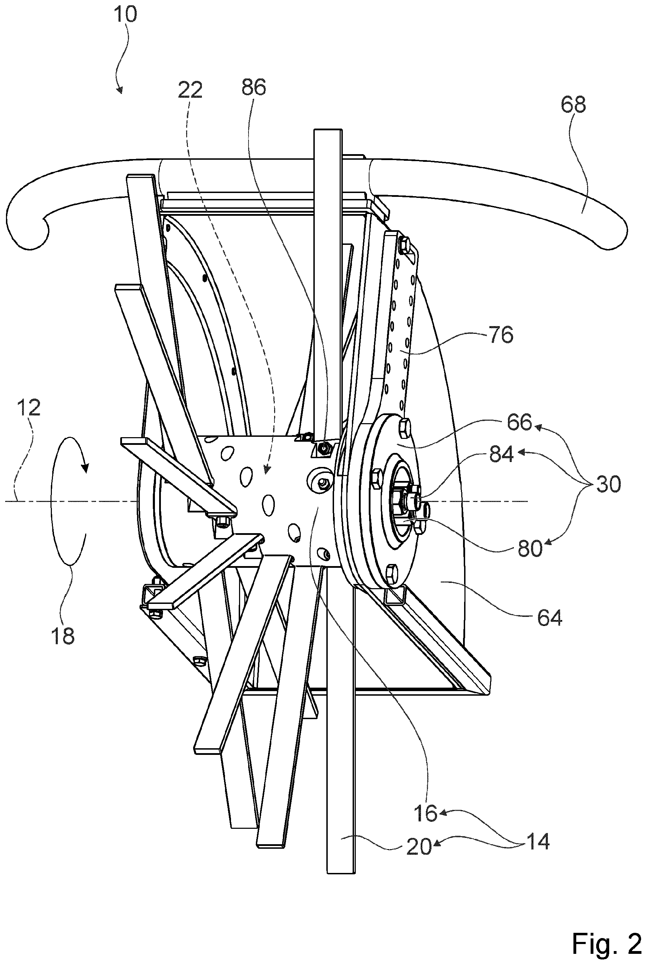

Figur 2 zeigt eine schematische perspektivische Ansicht der Trimmvorrichtung 10 in einem montierten Zustand. Die Trimmvorrichtung 10 umfasst eine Trimmeinheit 14, welche zu einer mechanischen Entfernung von Stockaustrieben an Rebstöcken (nicht dargestellt) vorgesehen ist. Die Trimmeinheit 14 ist um eine Drehachse 12 rotierbar. Die Trimmeinheit 14 umfasst eine Trimmwelle 16 und eine Vielzahl von entlang einer Umfangsrichtung 18 an der Trimmwelle 16 angeordneten Trimmelementen 20. Die Trimmelemente 20 sind jeweils lösbar mit der Trimmwelle 16 verbunden und zwar jeweils mittels einer Verbindungsschraube 86 an der Trimmwelle 16 angeschraubt. Die Trimmelemente 20 sind jeweils als sogenannte Schläger ausgebildet. Die Trimmelemente 20 sind aus einem elastisch verformbaren Material ausgebildet.

Von mehrfach vorhandenen Objekten ist in den Figuren lediglich eines mit einem Bezugszeichen versehen.

Die Trimmvorrichtung 10 umfasst eine Gehäuseeinheit 30. Die Gehäuseeinheit 30 weist ein Einhausungselement 64 auf. Das Einhausungselement 64 umschließt die Trimmeinheit 14 in dem montierten Zustand zumindest teilweise und zwar vorliegend zumindest über ein Viertel eines vollen Umfangs der Trimmwelle 16. Das Einhausungselement 64 ist zu einem Schutz vor Wurfgeschossen, beispielsweise in Form von durch die Trimmelemente 20 abgeschlagenen und herausgeschleuderten Teilen von Rebstöcken oder dergleichen, vorgesehen.

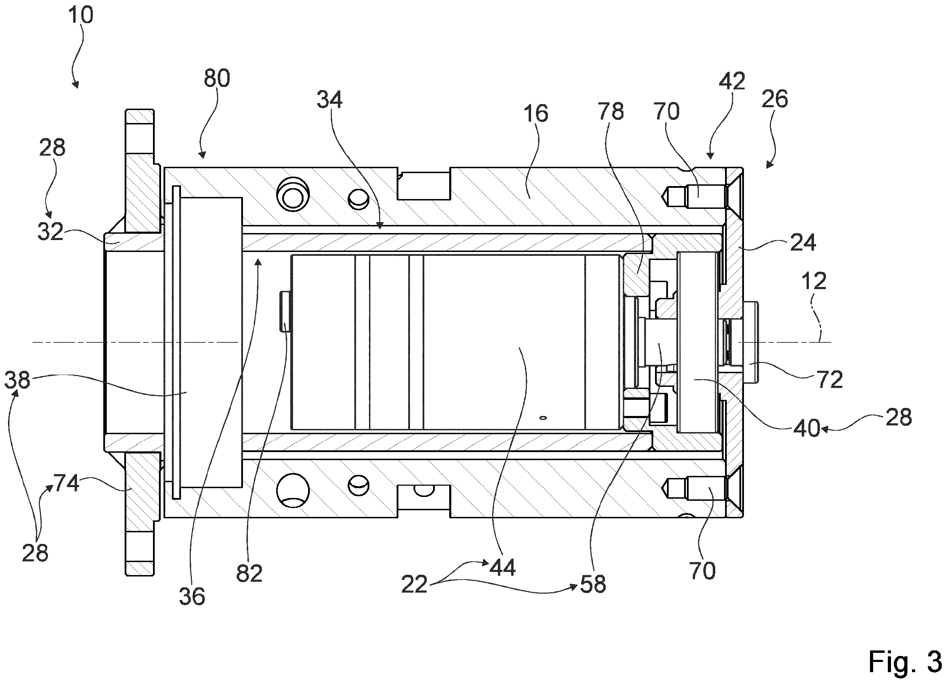

Die Trimmvorrichtung 10 umfasst eine Antriebseinheit 22. Die Antriebseinheit 22 ist zu einem Antrieb der Trimmeinheit 14 vorgesehen. In dem montierten Zustand der Trimmvorrichtung 10 ist die Antriebseinheit 22 innerhalb der Trimmwelle 16 angeordnet (vgl. Figur 3).

Figur 3 zeigt die Trimmvorrichtung 10 in einer schematischen Teilschnittansicht mit einem Schnitt durch die Trimmwelle 16.

Die Antriebseinheit 22 umfasst einen Hydraulikmotor 44. In einem Betriebszustand der Antriebseinheit 22 wandelt der Hydraulikmotor 44 eine hydraulische Energie, welche in Form eines Produktes aus einem Druck und einem Volumen einer Hydraulikflüssigkeit (nicht dargestellt) vorliegt, zumindest teilweise in mechanische Arbeit in Form eines Drehmoments zu einem Antrieb der Trimmeinheit 14. Die Antriebseinheit 22 weist zumindest einen Versorgungsanschluss 82 zu einer Versorgung des Hydraulikmotors 44 mit der Hydraulikflüssigkeit auf.

Die Trimmeinheit 14 weist ein Abschlusselement 24 auf. Das Abschlusselement 24 verschließt in dem montierten Zustand ein Ende 26 der Trimmwelle 16. Die Antriebseinheit 22 greift in dem montierten Zustand an dem Abschlusselement 24 an. Das Abschlusselement 24 ist form- und kraftschlüssig und zwar mittels mehrerer Schrauben 70 mit der Trimmwelle 16 verbunden. Die Antriebseinheit 22 weist eine Antriebswelle 58 auf. Die Antriebswelle 58 ist form- und kraftschlüssig, und zwar mittels einer weiteren Schraube 72 mit dem Abschlusselement 24 verbunden. In dem Betriebszustand der Antriebseinheit 22 wird das von dem Hydraulikmotor 44 bereitgestellte Drehmoment von der Antriebswelle 58 über das Abschlusselement 24 auf die Trimmwelle 16 übertragen.

Ein weiteres Ende 80 der Trimmwelle 16 ist in dem montierten Zustand in Richtung der Drehachse 12 offen (vgl. Figur 2). Über das offene weitere Ende 80 der Trimmwelle 16 kann zumindest ein Hydraulikkupplungselement 84 mit dem Versorgungsanschluss 82 der Antriebseinheit 22 verbunden werden. Mittels des Hydraulikkupplungselements 84 kann der Hydraulikmotor 44 über Hydraulikschläuche (nicht dargestellt) mit einer Hydraulikeinheit (nicht dargestellt) des Mulchgeräts 60 oder eines anderen landwirtschaftlichen Geräts (nicht dargestellt) zu einer Versorgung mit Hydraulikflüssigkeit verbunden werden.

Die Trimmvorrichtung 10 weist eine Lagereinheit 28 auf, welche die Antriebseinheit 22 und die Trimmeinheit 14 bezüglich der Gehäuseeinheit 30 lagert. Die Lagereinheit 28 weist einen feststehenden Innenzylinder 32 auf, an dem die Trimmwelle 16 an einer Außenseite 34 und die Antriebseinheit 22 an einer Innenseite 36 drehbar gelagert sind. Der Innenzylinder 32 weist einen Anschlussflansch 74 auf. Der Anschlussflansch 74 ist zu einer Verbindung des Innenzylinders 32 mit der Gehäuseeinheit 30 vorgesehen. In dem montierten Zustand ist der Innenzylinder 32 über den Anschlussflansch 74 und mittels eines Anschlussflanschs 66 der Gehäuseeinheit 30 an einem Anschlusselement 76 der Gehäuseeinheit 30 feststehend befestigt (vgl. Figur 2). In dem montierten Zustand ist der Innenzylinder 32 derart feststehend mit der Gehäuseeinheit 30 verbunden, dass eine Relativbewegung des Innenzylinders 32 zu der Gehäuseeinheit 30 verhindert ist.

Die Lagereinheit 28 weist zumindest ein Trimmlager 38 auf, mittels dessen die Trimmwelle 16 in dem montierten Zustand drehbar an der Außenseite 34 gelagert ist. Vorliegend weist die Lagereinheit 28 genau ein Trimmlager 38 auf, welches als ein Kugellager ausgebildet ist. Das Trimmlager 38 ist an der Außenseite 34 formschlüssig mit dem Innenzylinder 32 der Lagereinheit 38 verbunden. Die Trimmwelle 16 ist formschlüssig mit dem Trimmlager 38 verbunden und zwar derart, dass eine Drehung der Trimmwelle 16 um den feststehenden Innenzylinder 32 möglich ist.

Die Lagereinheit 28 weist zumindest ein Antriebslager 40 auf, mittels dessen die Antriebseinheit 22 in dem montierten Zustand drehbar an der Innenseite 36 des Innenzylinders 32 gelagert ist. Vorliegend weist die Lagereinheit 28 genau ein Antriebslager 40 auf, welches als ein Kugellager ausgebildet ist. Das Antriebslager 40 ist mittels eines Verbindungselements 78 an der Innenseite 36 formschlüssig mit dem Innenzylinder 32 verbunden.

Der Hydraulikmotor 44 ist in dem montierten Zustand vollständig innerhalb des Innenzylinders 32 angeordnet und mittels des Antriebslagers 40 drehbar innerhalb des Innenzylinders 32 gelagert. In dem Betriebszustand der Antriebseinheit 22 dreht sich der Hydraulikmotor 44 innerhalb des Innenzylinders 32 um die Drehachse 12, sodass ein Drehmoment von der Antriebswelle 58 über das Abschlusselement 24 auf die Trimmwelle 16 übertragen wird und die Trimmwelle 16 in eine Rotationsbewegung um die Drehachse 12 versetzt wird.

Das Antriebslager 40 ist in dem montierten Zustand in einem Nahbereich 42 des Abschlusselements 24 angeordnet. Das Trimmlager 38 ist in dem montierten Zustand weiter von dem Abschlusselement 24 entfernt angeordnet als das Antriebslager 40. Vorliegend ist das Trimmlager 38 maximal entfernt zu dem Abschlusselement 24 angeordnet, und zwar an dem weiteren Ende 80 der Trimmwelle 16.

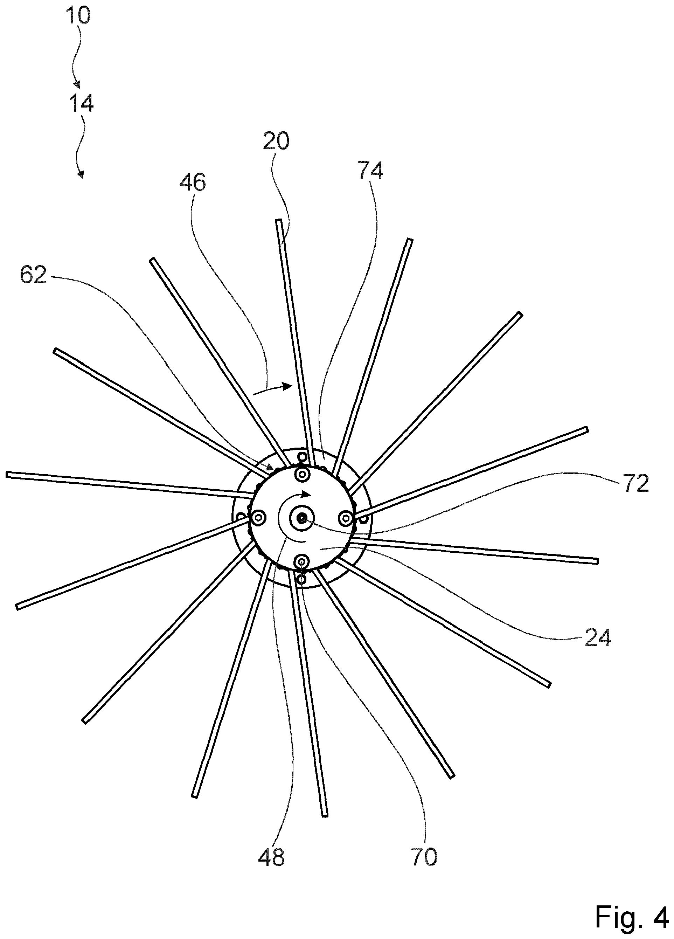

Figur 4 zeigt die Trimmeinheit 14 in einer schematischen Seitenansicht in Blickrichtung entlang der Drehachse 12 auf das Abschlusselement 24. Die Trimmelemente 20 der Trimmeinheit 14 sind in einem spitzen Ausgangswinkel 46 zu der Drehachse 12 mit der Trimmwelle 16 verbunden. Vorliegend weist der spitze Ausgangswinkel 46 einen Wert von 30° auf. Hierdurch kann eine mechanische Belastung der Trimmelemente 20 an einer Verbindungstelle 62 mit der Trimmwelle 16 gegenüber bekannten Ausgestaltungen mit einem rechten Ausgangswinkel (nicht dargestellt) deutlich reduziert werden. Der spitze Ausgangswinkel 46 ist bezüglich einer Drehrichtung 48 der Trimmwelle 16 nacheilend.

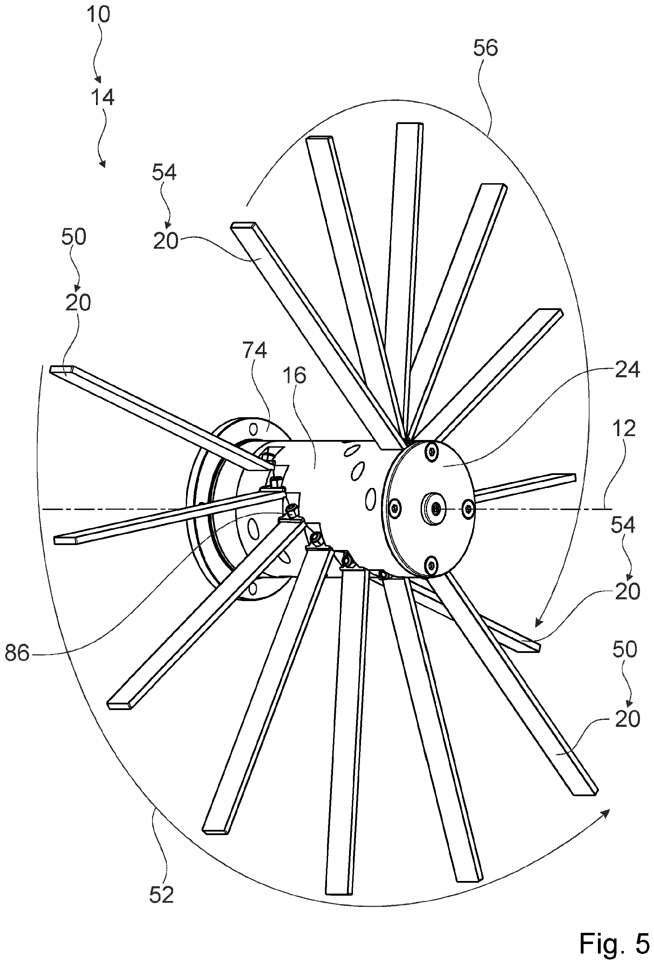

In Figur 5 ist die Trimmeinheit 14 in einer schematischen perspektivischen Ansicht dargestellt. Die Trimmelemente 20 der Trimmeinheit 14 sind entlang der Umfangsrichtung 18 der Trimmwelle 16 spiralförmig angeordnet. Vorliegend ist eine erste Gruppe 50 von Trimmelementen 20 entlang der Umfangsrichtung 18 in einem ersten Spiralverlauf 52 angeordnet. Eine zweite Gruppe 54 von Trimmelementen 20 ist entlang der Umfangsrichtung in einem zu dem ersten Spiralverlauf 52 gegenläufigen zweiten Spiralverlauf 56 angeordnet. Jeweils ein Trimmelement 20 der ersten Gruppe 50 und jeweils ein Trimmelement 20 der zweiten Gruppe 54 sind bezüglich der Drehachse 12 auf gegenüberliegenden Seiten angeordnet, wodurch eine Laufruhe der Trimmwelle 16 verbessert ist.

### Bezugszeichen

- 10: Trimmvorrichtung
- 12: Drehachse
- 14: Trimmeinheit
- 16: Trimmwelle
- 18: Umfangsrichtung
- 20: Trimmelement
- 22: Antriebseinheit
- 24: Abschlusselement
- 26: Ende
- 28: Lagereinheit
- 30: Gehäuseeinheit
- 32: Innenzylinder
- 34: Außenseite
- 36: Innenseite
- 38: Trimmlager
- 40: Antriebslager
- 42: Nahbereich
- 44: Hydraulikmotor
- 46: spitzer Ausgangswinkel
- 48: Drehrichtung
- 50: erste Gruppe
- 52: erster Spiralverlauf
- 54: zweite Gruppe
- 56: zweiter Spiralverlauf
- 58: Antriebswelle
- 60: Mulchgerät
- 62: Verbindungsstelle
- 64: Einhausungselement
- 66: Anschlussflansch
- 68: Verbindungselement
- 70: Schraube
- 72: weitere Schraube
- 74: Anschlussflansch
- 76: Anschlusselement
- 78: Verbindungselement
- 80: weiteres Ende
- 82: Versorgungsanschluss
- 84: Hydraulikkupplungselement
- 86: Verbindungsschraube

## Patentansprüche

1. Trimmvorrichtung (10), insbesondere Stockputzer, insbesondere zur Bearbeitung von Rebstöcken im Weinbau, mit einer um eine Drehachse (12) rotierbaren Trimmeinheit (14), welche zu einer mechanischen Entfernung von Stockaustrieben an Rebstöcken vorgesehen ist und eine Trimmwelle (16) und eine Vielzahl von entlang einer Umfangsrichtung (18) an der Trimmwelle (16) angeordneten Trimmelementen (20) aufweist, mit einer Antriebseinheit (22) zu einem Antrieb der Trimmeinheit (14), wobei die Antriebseinheit (22) in einem montierten Zustand innerhalb der Trimmwelle (16) angeordnet ist und mit einer Lagereinheit (28), welche die Antriebseinheit (22) und die Trimmeinheit (14) bezüglich einer Gehäuseeinheit (30) lagert, wobei die Lagereinheit (28) einen feststehenden Innenzylinder (32) aufweist, an dem die Trimmwelle (16) an einer Außenseite (34) und die Antriebseinheit (22) an einer Innenseite (36) drehbar gelagert sind.

2. Trimmvorrichtung (10) nach Anspruch 1, **dadurch gekennzeichnet, dass** die Trimmeinheit (14) ein Abschlusselement (24) aufweist, welches in dem montierten Zustand ein Ende (26) der Trimmwelle (16) verschließt und an welchem die Antriebseinheit (22) angreift.

3. Trimmvorrichtung (10) nach Anspruch 1 oder 2, **dadurch gekennzeichnet, dass** die Lagereinheit (28) zumindest ein Trimmlager (38) aufweist, mittels dessen die Trimmwelle (16) in dem montierten Zustand drehbar an der Außenseite (34) des Innenzylinders (32) gelagert ist.

4. Trimmvorrichtung (10) nach einem der vorhergehenden Ansprüche,
**dadurch gekennzeichnet, dass** die Lagereinheit (28) zumindest ein Antriebslager (40) aufweist, mittels dessen die Antriebseinheit (22) in dem montierten Zustand drehbar an der Innenseite (36) des Innenzylinders (32) gelagert ist.

5. Trimmvorrichtung (10) zumindest nach den Ansprüchen 2 und 4, **dadurch gekennzeichnet, dass** das Antriebslager (40) in dem montierten Zustand in einem Nahbereich (42) des Abschlusselements (24) angeordnet ist.

6. Trimmvorrichtung (10) zumindest nach den Ansprüchen 2, 3 und 4,
**dadurch gekennzeichnet, dass** das Trimmlager (38) in dem montierten Zustand weiter von dem Abschlusselement (24) entfernt angeordnet ist als das Antriebslager (40).

7. Trimmvorrichtung (10) nach einem der vorhergehenden Ansprüche,
**dadurch gekennzeichnet, dass** die Antriebseinheit (22) einen Hydraulikmotor (44) umfasst.

8. Trimmvorrichtung (10) nach einem der vorhergehenden Ansprüche,
**dadurch gekennzeichnet, dass** die Trimmelemente (20) in einem spitzen Ausgangswinkel (46) zu der Drehachse (12) mit der Trimmwelle (16) verbunden sind.

9. Trimmvorrichtung (10) nach Anspruch 8, **dadurch gekennzeichnet, dass** der spitze Ausgangswinkel (46) bezüglich einer Drehrichtung (48) der Trimmwelle (16) nacheilend ist.

10. Trimmvorrichtung (10) nach einem der vorhergehenden Ansprüche,
**dadurch gekennzeichnet, dass** die Trimmelemente (20) entlang der Umfangsrichtung (18) der Trimmwelle (16) spiralförmig angeordnet sind.

11. Trimmvorrichtung (10) nach Anspruch 10, **dadurch gekennzeichnet, dass** eine erste Gruppe (50) von Trimmelementen (20) entlang der Umfangsrichtung (18) in einem ersten Spiralverlauf (52) angeordnet ist und eine zweite Gruppe (54) von Trimmelementen (20) entlang der Umfangsrichtung (18) in einem zu dem ersten Spiralverlauf (52) gegenläufigen zweiten Spiralverlauf (56) angeordnet ist.

12. Trimmvorrichtung (10) nach Anspruch 11, **dadurch gekennzeichnet, dass** jeweils ein Trimmelement (20) der ersten Gruppe (50) und jeweils ein Trimmelement (20) der zweiten Gruppe (54) bezüglich der Drehachse (12) auf zueinander gegenüberliegenden Seiten der Trimmwelle (16) angeordnet sind.

13. Mulchgerät (60) mit zumindest einer Trimmvorrichtung (10) nach einem der vorhergehenden Ansprüche.

## Claims

1. Trimming device (10), in particular stem cleaner, in particular for a treatment of grapevines in viticulture,
with a trimming unit (14) which is rotatable around a rotary axis (12) and is configured for mechanically removing vine tendrils on grapevine stems and comprises a trimming shaft (16) and a plurality of trimming elements (20) which are arranged on the trimming shaft (16) along a circumferential direction (18),
with a drive unit (22) for driving the trimming unit (14), wherein the drive unit (22) is in a mounted state arranged within the trimming shaft (16), and with a bearing unit (28) which supports the drive unit (22) and the trimming unit (14) with respect to a housing unit (30),
wherein the bearing unit (28) comprises a fix inner cylinder (32) on which the trimming shaft (16) is rotatably mounted on an outer side (34) and the drive unit (22) is rotatably mounted on an inner side (36).

2. Trimming device (10) according to claim 1,
**characterised in that** the trimming unit (14) comprises a closure element (24) which in the mounted state closes an end (26) of the trimming shaft (16) and at which the drive unit (22) engages.

3. Trimming device (10) according to claim 1 or 2,
**characterised in that** the bearing unit (28) comprises at least one trimming bearing (38) by which the trimming shaft (16) is in the mounted state mounted in a rotatable manner on the outer side (34) of the inner cylinder (32).

4. Trimming device (10) according to one of the preceding claims,
**characterised in that** the bearing unit (28) comprises at least one drive bearing (40) by means of which the drive unit (22) is in the mounted state supported in a rotatable manner on the inner side (36) of the inner cylinder (32).

5. Trimming device (10) at least according to claims 2 and 4,
**characterised in that** the drive bearing (40) is in the mounted state arranged in a proximity (42) of the closure element (24).

6. Trimming device (10) at least according to claims 2, 3 and 4,
**characterised in that** the trimming bearing (38) is in the mounted state arranged farther away from the closure element (24) than the drive bearing (40).

7. Trimming device (10) according to one of the preceding claims,
**characterised in that** the drive unit (22) comprises a hydraulic motor (44).

8. Trimming device (10) according to one of the preceding claims, **characterised in that** the trimming elements (20) are connected to the trimming shaft (16) at an acute exit angle (46) with respect to the rotary axis (12).

9. Trimming device (10) according to claim 8,
**characterised in that** the acute exit angle (46) is lagging with respect to a direction of rotation (48) of the trimming shaft (16).

10. Trimming device (10) according to one of the preceding claims, **characterised in that** the trimming elements (20) are arranged in a spiral shape along the circumferential direction (18) of the trimming shaft (16).

11. Trimming device (10) according to claim 10,
**characterised in that** a first group (50) of trimming elements (20) is arranged along the circumferential direction (18) in a first spiral course (52) and a second group (54) of trimming elements (20) is arranged along the circumferential direction (18) in a second spiral course (56) opposed to the first spiral course (52).

12. Trimming device (10) according to claim 11,
**characterised in that** respectively one trimming element (20) of the first group (50) and respectively one trimming element (20) of the second group (54) are arranged on sides of the trimming shaft (16) which are situated opposite each other with respect to the rotary axis (12).

13. Mulching apparatus (60) comprising at least one trimming device (10) according to one of the preceding claims.

## Revendications

1. Dispositif de coupage (10), en particulier dispositif d'épamprage, en particulier pour le traitement de ceps dans la viticulture,
avec une unité de coupage (14) qui peut être tournée autour d'un axe rotatif (12), qui est conçue pour un enlèvement mécanique de pampres des pieds de vigne et qui comprend un arbre-coupage(16) et une pluralité d'éléments coupeur (20) disposés le long d'une direction circonférentielle (18) sur l'arbre-coupage (16),
avec une unité d'entraînement (22) pour un entraînement de l'unité de coupage (14), l'unité d'entraînement (22) étant disposée en état monté à l'intérieur de l'arbre-coupage (16)
et avec une unité de palier (28) qui supporte l'unité d'entraînement (22) et l'unité de coupage (14) par rapport à une unité de boîtier (30),
l'unité de palier (28) comprenant un cylindre intérieur fixe (32) sur lequel l'arbre-coupage (16) est supporté de manière rotative à un côté extérieur (34) et l'unité d'entraînement (22) est supportée de manière rotative à un côté intérieur (36).

2. Dispositif de coupage (10) selon la revendication 1,
**caractérisé en ce que** l'unité de coupage (14) comprend un élément terminal (24) qui, en état monté, ferme une extrémité (26) de l'arbre-coupage (16) et sur lequel l'unité d'entraînement (22) agit.

3. Dispositif de coupage (10) selon la revendication 1 ou 2,
**caractérisé en ce que** l'unité de palier (28) comprend au moins un palier-coupage (38) moyennant lequel l'arbre-coupage (16), en état monté, est supporté de manière rotative sur le côté extérieur (34) du cylindre intérieur (32).

4. Dispositif de coupage (10) selon l'une des revendications précédentes, **caractérisé en ce que** l'unité de palier (28) comprend au moins un palier d'entraînement (40) moyennant lequel l'unité d'entraînement (22), en état monté, est supportée de manière rotative sur le côté intérieur (36) du cylindre intérieur (32).

5. Dispositif de coupage (10) au moins selon les revendications 2 et 4, **caractérisé en ce que** le palier d'entraînement (40), en état monté, est disposé dans une proximité (42) de l'élément terminal (24).

6. Dispositif de coupage (10) au moins selon les revendications 2, 3 et 4, **caractérisé en ce que** le palier-coupage (38), en état monté, est disposé plus loin de l'élément terminal (24) que le palier d'entraînement (40).

7. Dispositif de coupage (10) selon l'une des revendications précédentes, **caractérisé en ce que** l'unité d'entraînement (22) comprend un moteur hydraulique (44).

8. Dispositif de coupage (10) selon l'une des revendications précédentes, **caractérisé en ce que** les éléments coupeur (20) sont reliés à l'arbre-coupage (16) en incluant un angle de sortie aigu (46) avec l'axe rotatif (12).

9. Dispositif de coupage (10) selon la revendication 8,
**caractérisé en ce que** l'angle de sortie aigu (46) est en retard par rapport à un sens de rotation (48) de l'arbre-coupage (16).

10. Dispositif de coupage (10) selon l'une des revendications précédentes, **caractérisé en ce que** les éléments coupeur (20) sont disposés en forme de spirale le long de la direction circonférentielle (18) de l'arbre-coupage (16).

11. Dispositif de coupage (10) selon la revendication 10,
**caractérisé en ce qu'**un premier groupe (50) d'éléments coupeur (20) est disposé le long de la direction circonférentielle (18) dans un premier tracé en spirale (52) et un deuxième groupe (54) d'éléments coupeur (20) est disposé le long de la direction circonférentielle (18) dans un deuxième tracé en spirale (56) opposé au premier tracé en spirale (52).

12. Dispositif de coupage (10) selon la revendication 11,
**caractérisé en ce que** respectivement un élément coupeur (20) du premier groupe (50) et respectivement un élément coupeur (20) du deuxième groupe (54) sont disposés par rapport à l'axe rotatif (12) sur des côtés opposés l'un à l'autre de l'arbre-coupage (16).

13. Pailleuse (60) avec au moins un dispositif de coupage (10) selon l'une des revendications précédentes.
